# EUROPEAN PATENT SPECIFICATION

(11) **EP 4 646 518 B1**
(45) Date of publication and mention of the grant of the patent: **20.05.2026**
(21) Application number: 24812223.6
(22) Date of filing: 29.10.2024
(51) Int. Cl.: E04H 4/00, A63B 69/00

(54) **WAVE GENERATOR SYSTEM BY MEANS OF SEQUENTIAL MODULES**
WELLENGENERATORSYSTEM MITTELS SEQUENTIELLER MODULE
SYSTÈME DE GÉNÉRATEUR D'ONDES AU MOYEN DE MODULES SÉQUENTIELS

(30) Priority: 03.11.2023 EP 23383119; 17.10.2024 EP 24383136
(43) Date of publication of application: 12.11.2025
(73) Proprietor: Instant Sport, S.L., 20002 Donostia-San Sebastián, Gipúzkoa (ES)
(72) Inventor: ODRIOZOLA SAGASTUME, José Manuel, 20002 Donostia-San Sebastián, Gipúzkoa (ES)
(74) Representative: Cueto, Sénida
(86) International application number: PCT/IB2024/060640
(87) International publication number: WO 2025/094041

(56) References cited:
- ES-A1- 2 611 764
- US-A- 4 783 860
- US-A1- 2022 372 780
- US-B1- 11 255 098

## Description

### Technical field

The invention relates to a system for generating surfable waves in an aquatic environment, in particular to a wave generator system by means of a set of sequential modules with a particularly advantageous arrangement and geometry.

### State of the art

In the state of the art, multiple designs of devices and systems for the generation of artificial waves in an aquatic environment, for sports or recreational purposes, are known. In particular, different systems are known for generating surfable waves, i.e. waves suitable for surfing. Surfable waves or artificial waves suitable for surfing are commonly considered in the sector to be those waves capable of simulating certain breaking waves that occur naturally in the sea. For this purpose, the artificial wave must be high, dynamic, high-energy and gradually breaking. In addition, the ideal wave should preferably have a tube in which the surfer can perform his routines or techniques.

An example of a surfable wave generator system, based on horizontal piston technology, is described in ES2611764B1 patent in the name of the same applicant as the present invention. This patent describes a lagoon provided with an artificial wave generator system based on the serpentine movement of a movable barrier, for the generation of waves in two zones of the lagoon. The barrier comprises, for example, a plurality of horizontal pistons, panels or other types of movable elements, which move translationally back and forward with a time lag between them. The barrier panels push the surrounding water of the mass of water for wave generation in two directions of the wave lagoon. Each panel extends substantially from a floor of the wave lagoon below the barrier to a height above the wave crest height, being driven by an independent drive system arranged above the panel. In various embodiments of this invention, the pistons or panels of the wave generator are repeatedly moved within a mass of water, by translational and/or tilting movements, with respect to the mass of water, in order to displace water horizontally. The wave generator described in ES2611764B1 is particularly advantageous because it provides high quality surfable waves, with highly efficient energy consumption and at a viable cost. This efficient technology, which allows the generation of waves on both sides of the barrier, may not be feasible in installations where there is a space limitation to implement a double lagoon with waves on both sides of the movable barrier.

Alternative lagoon systems for generating surfable waves only on one side of the generator are known in the prior art. An example is described in US11255098B1 publication. The generator comprises a plurality of movable elements arranged in series. The invention is compatible with various known technologies for implementing the movable elements, such as tilting pistons. As explained in this publication, when the piston is submerged in the mass of water, both front and rear surfaces of the movable element are exposed to the water, so that the movement of the movable element produces waves in the desired direction (away from the front surface of the wave generator) but also in an undesired direction (away from the rear surface of the wave generator.

The generation of rear waves is problematic, as it generates a rise in the water level at the rear of the generator, which can cause splashing or flooding, unwanted interference with the desired wave generation and, above all, implies an increase in the generator's energy consumption. In order to solve this problem, the US11255098B1 invention proposes the use of a displacer, configured to move synchronously with the wave generator, displacing water from the rear of the wave generator. In this way, it seeks to compensate for changes in water elevation at the rear of the wave generator so that the elevation of the water level behind the wave generator remains essentially constant, thereby reducing the power requirements of the drive system. However, this displacer-based system only partially compensates for the additional power consumption caused by the rear wave generation at the back of the pistons.

Another example of generating surfable waves using sequenced movable elements is disclosed in ES2653719T3 and ES2782698T3 publications. A method for wave generation using sequential generator modules with a staggered arrangement is proposed. The staggered line can be straight or curved. The first publication ES2653719T3 describes a wave pool using multiple sequential generator modules placed in a rectilinear staggered arrangement, parallel to the breaking line and oblique to the wave crest. The generator modules are housed in adjacent locations delimited laterally by prolonged divisional walls. These divisional walls may be substantially parallel or have a certain angle of divergence. The divisional walls enable the formation of multiple wave segments that converge with each other to form a single progressive, surfable wave, minimising the formation of turbulence, interference or undesirable disturbances in the convergence zones of the wave segments. For this purpose, divisional walls extend forward of each generator module, confining the energy of the wave segments as these segments are generated and move forward before merging with the adjacent wave segments. Ahead of each wave generator module, three wave-forming zones or areas are distinguished with respect to the divisional walls. The first wave-forming zone is delimited between two divisional walls ahead of each module. The wave segments formed travel along this first zone, so that the energy of the wave segments is substantially confined, preventing interference or collision between adjacent wave segments, before entering the convergence zones and merging with other segments of the series. The second zone, ahead of the first formation zone, is delimited by a single divisional wall on one side and by open water on the other side. It constitutes a partial convergence zone of each wave segment, which begins to converge along one side with an adjacent wave segment of the series. A third zone, ahead of the partial convergence zone, is already a complete wave convergence zone with open water at both sides. Here, the convergence of these wave segments is completed to form the resulting single smooth and progressive wave with a smooth shape. The second publication ES2782698T3 applies the described system to the case of arranging the generator modules along a curved staggered line.

The described solutions, based on sequential staggered module generators, provide a possible solution in relation to the formation of undesirable turbulence at the exit of the divisional walls. However, these systems have limitations in terms of the type of waves that can be generated and the possibility of turning the wave front generated without excessively increasing the energy consumption required to do so. Other sequential wave generator systems not disclosing divisional walls are described in US 2022/372780 A1 and US4783860A documents.

It is an aim of the present invention a system for generating waves suitable for surfing, provided with a plurality of sequential modules separated by divisional walls or other intermediate structures, suitable for cases in which it is not possible to install a double lagoon with waves on both sides of the wave generator, due to insufficient space or for other reasons. The proposed system proposes an alternative solution to the problem of turbulence usually present at the outlet of conventional divisional walls. Additionally, the solution of the invention is versatile, allowing the generation of a variety of wave types with different travelling directions and with an efficient energy cost.

### Brief description of the invention

The invention relates to a surfable wave generation system, based on sequential modules. In the context of the present invention, a sequential module generator system means a wave generator system based on the arrangement of a set of contiguous modules or movable elements (generators) acting in sequence to produce a surfable wave. These modules or movable elements may be positioned, for example, in line or in a row. The movable elements may be horizontal pistons, tilting pistons ("flaps") or other types of movable elements that can be moved and/or tilted in a sequential and repeatable manner. In any case, the generators or movable elements form a moving wall with a changing shape capable of causing disturbances in the mass of water to generate surfable waves. These movable elements of the sequential modular system move with a time lag between them. Thus, the moving wall defined by the modules acquires a serpentine movement that generates surfable waves. By controlling the offset between adjacent modules, it is possible to control the angle and curvature of the wave front to generate different types of waves.

A first object of the invention is a wave W generator system in a mass of water. The waves W are formed in a front water zone of the mass of water with respect to the generator system. The generator system, of a modular type, comprises at least a set of sequential modules arranged in adjacent locations. Each sequential module comprises a movable element, capable of causing disturbances in the mass of water for the formation of surfable waves W in the front water zone of the mass of water. Each pair of consecutive adjacent locations is at least partially delimited by an intermediate structure, each intermediate structure extending between two contiguous movable elements towards the water zone. The generator system has the following particularities. Each movable element is provided with a widened portion and this widened portion is located ahead of a lower part of at least one adjacent delimiting intermediate structure. That is to say, the widened portions are arranged in a forward location, ahead of the lower part of the intermediate structures of the adjacent modules. Each movable element comprises a rear portion located behind the widened portion, this rear portion being narrower than the widened portion.

An advantageous configuration of setback intermediate structures between the sequential modules is obtained, so that the lower part of the intermediate structures does not protrude beyond the pushing surface of the adjacent movable elements at any time during the movement sequence. This configuration of setback intermediate structures helps to prevent the wave W from being affected by turbulence, which usually forms at the exit of the divisional walls, as the intermediate structures of the invention are located further back.

Because the widened portion of the movable elements is placed ahead of a lower part of the adjacent intermediate structures, when the wave generator system is at rest and also during the whole movement sequence of the movable elements, it is possible to reduce the gap between two adjacent movable elements. This minimises the unwanted flow of water towards the rear of the generator, providing a better watertightness and optimising energy consumption. The water pushing surface of each module or movable element is very close to the pushing surface of the contiguous module, allowing the water to flow with maximum efficiency. Thus, the use of setback intermediate structures enables the generation of turned and curved wave fronts by controlling the offset between modules, improving energy efficiency by up to 60% in the most rotated waves.

In summary, the use of the characterising intermediate structures of the invention allows turned and curved generated waves, providing a solution to the problem of energy loss and turbulence common at the exit of conventional divisional walls.

In the context of the present invention, a non-turned wave is understood to be a wave in which the water particles move in the pushing direction of the movable element or piston. A turned wave is considered to be a wave advancing in a direction not perpendicular to the arrangement direction of the sequential modules. For example, in a particular embodiment provided with a set of sequential modules arranged according to a rectilinear direction L and intermediate structures extending towards the water zone in a direction X perpendicular to the direction L, the non-turned wave is a wave advancing in the direction X and the turned wave advances in a direction not perpendicular to the direction L.

On the other hand, a curved wave is a wave in which the particle speed of the wavefront crest has different directions of travel at different points along the wavefront.

Optionally, each sequential module comprises a movable element specifically designed to form part of the wave generator system of the invention. This movable element is a tilting generator around an axis arranged above the pushing face of the tilting generator. This top axis tilting generator has the particularity of comprising a widened portion configured to be located ahead of a lower part of at least one adjacent intermediate structure when the tilting generator is installed in the generator system.

The invention also relates to a surfable wave W lagoon comprising the generator system.

Further advantages and details of the invention are included in the detailed description, with reference to the particular embodiments of figures.

### Brief description of the figures

The details of the invention are shown in the accompanying figures, which are not intended to limit the scope of the invention:
Figure 1 illustrates schematically a wave generation system, known in the Prior Art, with sequential staggered modules.
Figure 2 schematically illustrates another conventional wave generation system, the generator comprising a plurality of sequential modules, separated by walls and arranged in a non-staggered manner, so as to allow for the turning of the generated wavefront.
Figure 3 shows a perspective view of a first embodiment of the wave generator system according to the invention, wherein the movable elements are top-axis tilting generators for the generation of surfable waves W in a lagoon and wherein the intermediate structures are concrete walls.
Figure 4a shows a perspective view of the generator system of Figure 3, with the tilting generators at the forward position of their tilting range.
Figure 4b shows a perspective view of the generator system of Figure 3, with the tilting generators at the backward position of their tilting range.
Figure 5 shows a perspective view of several tilting generators comprised in the generator system of Figure 3.
Figure 6 shows a partial enlarged view of two tilting generators of the previous figure.
Figure 7 is a detailed view showing the separation between two adjacent tilting generators of the previous figure.
Figure 8 shows a perspective view of an embodiment of the tilting generators of the system of Figure 3.
Figure 9 shows a perspective rear view of several tilting generators of the system of Figure 3.
Figure 10 is a side sectional view of the system of Figure 3.
Figure 11a shows a perspective view of a second embodiment of the modular generator system of the invention, wherein the movable elements are horizontal pistons.
Figure 11b shows a plan view of the generator system of Figure 11a.
Figure 11c shows a side view of one of the horizontal pistons of the generator system of Figure 11a.
Figure 12a shows a perspective view of a third embodiment of the modular generator system of the invention, wherein the movable elements are sloped pistons.
Figure 12b shows a plan view of the generator system of Figure 12a.
Figure 12c shows a side view of one of the sloped pistons of the generator system of Figure 12a.
Figure 13a shows a perspective view of a fourth embodiment of the modular generator system of the invention, wherein the movable elements are lower axis tilting pistons.
Figure 13b shows a plan view of the generator system of Figure 13a.
Figure 13c shows a side view of one of the lower axis tilting pistons of the generator system of Figure 13a.
Figure 14a shows a perspective view of an alternative embodiment of the generator system wherein the intermediate structures are metallic structures.
Figure 14b shows another perspective view of the embodiment of Figure 14a.
Figure 15a shows a side view of one of the metallic structures of Figures 14a and 14b.
Figure 15b shows another side view of one of the metallic structures of Figures 14a and 14b.

### Detailed description of the invention

A first aspect of the invention relates to a wave generator system based on sequential modules.

Modular wave generator systems with divisional walls arranged between each module of the generator system are known in the State of the Art. The use of divisional or intermediate walls between two adjacent modules provides advantageous features to the system, enabling greater control over the wave generated and allowing the generation of turned and curved wave fronts of great interest in the sector. The main problem with this type of system, as described in the introductory section of this document, is the appearance of turbulence at the exit areas of the divisional walls and the consequent energy loss of up to 60%, especially in the case of turned wave fronts.

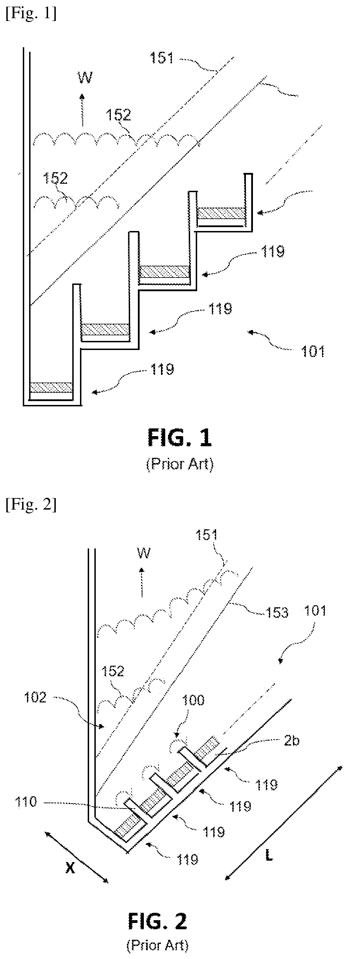

Figure 1 schematically illustrates a wave generator system (101), known in the Prior Art, wherein the generator system (101) comprises a plurality of sequential modules (119) staggered according to an arrangement parallel to the trajectory of the breaking point (151) of the wave and oblique with respect to the wave front (152). The system is considered unsuitable for generating surfable wave W fronts with sufficient quality and, at the same time, with adequate control of the turbulence that usually forms at the exit of the divisional walls and with reduced energy consumption.

Figure 2 schematically illustrates another wave W generator system (101), known in the Prior Art, also provided with a plurality of sequential modules (119), separated by divisional walls (110) which are arranged in a non-staggered manner, allowing the generation of turned and curved waves. The waves W are formed in the mass of water (102) above a floor beneath the mass of water (102). The floor comprises a slope change zone or reef (153) defined as a transition zone between a deeper zone between the reef (153) and the wave W generator system (101) and a shallower zone beyond the reef (153). The wave W generator system (101) causes the displacement of water towards the reef (153) and the formation of surfable waves W in a front water zone of the mass of water (102) with respect to the generator system (101). As shown in figure, the divisional walls (110) extend substantially perpendicular to a rear wall (105) along a direction X. The system has the disadvantage associated with unwanted excess of turbulence (100) for certain types of waves W.

The present invention pursues a compromise in such a way as to provide a solution to the problem of turbulence formation at the exit of the intermediate walls and consequent increase in energy consumption and, at the same time, to make possible the generation of a variety of waves including turned and curved wavefronts with reduced energy consumption.

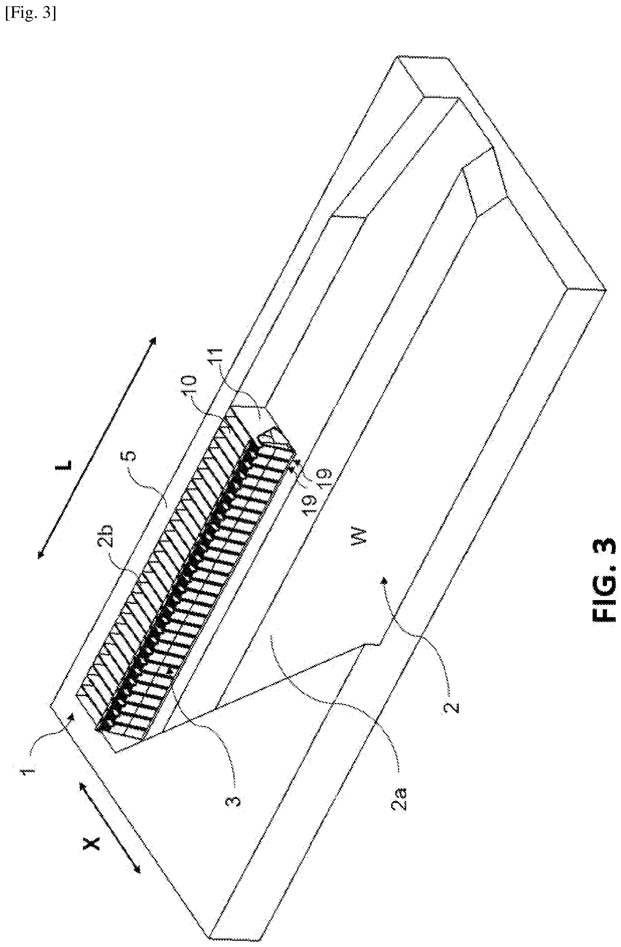

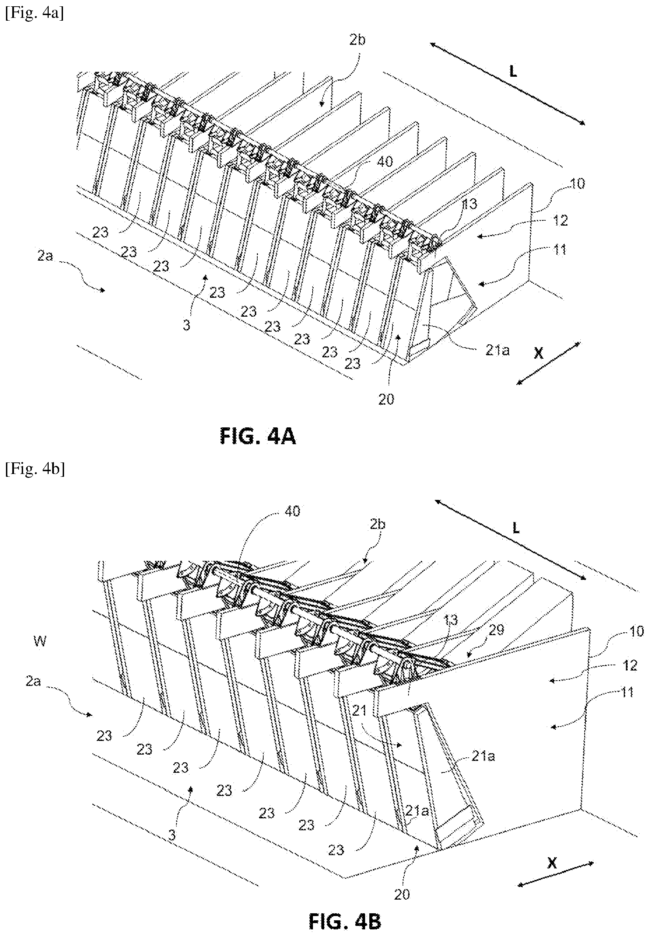

Figure 3 shows a perspective view of a first embodiment of the wave generator system according to the invention. Figures 4 to 7 show more detailed perspective views of the system of Figure 3. As shown in Figure 3, in this particular embodiment of the generator system (1) according to the invention, all sequential modules (19) are arranged according to a direction L in adjacent or contiguous locations. Between two contiguous locations, an intermediate structure (10), in particular a concrete wall, is provided which extends in a direction X perpendicular to the direction L towards a front water zone (2a) of the mass of water (2) in which the surfable waves W are formed. In the particular embodiment of the figures, the sequential modules (19) are located ahead of a rear wall (5), so that the intermediate structures (10), concrete partitions in this case, extend from said rear wall (5) towards the front water zone (2a).

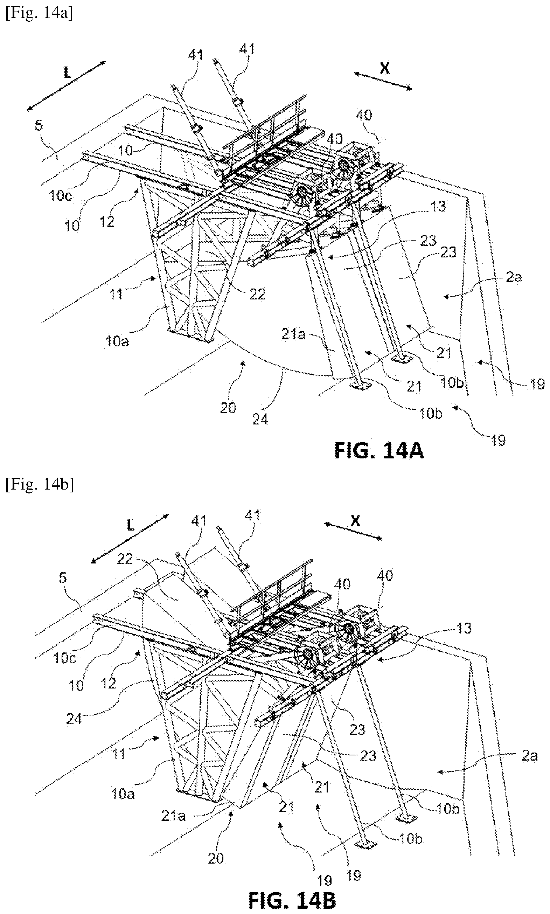

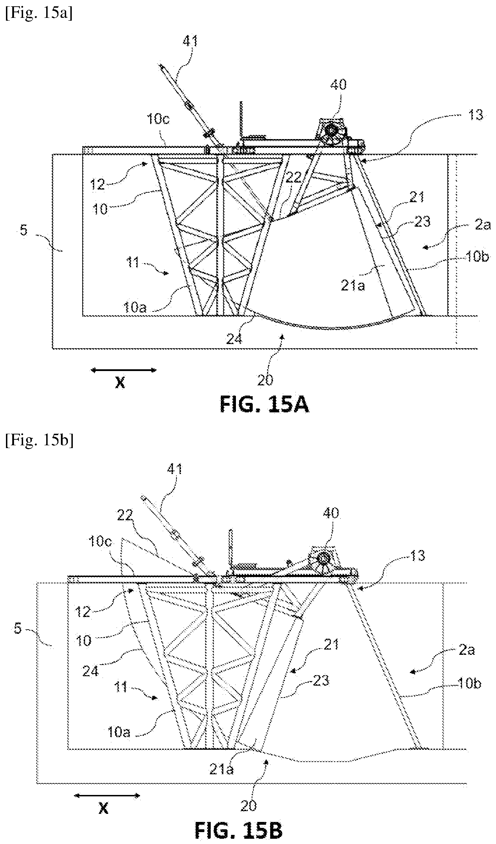

In other embodiments than the one shown in the figures, at the rear of the sequential modules (19) the system may have a different configuration, for example, an infinity mass of water or a beach, instead of a rear wall (5). In other embodiments of the invention, the intermediate structure (10) may be different from a concrete wall, for example, it may be a metallic structure as in the embodiment of Figures 14a, 14b, 15a and 15b.

Back to the embodiment of Fig.3, the direction L is the arrangement direction of the sequential modules (19) of the generator system (1), i.e. the direction along which the movable wall (3) defined by the movable elements of the sequential modules (19) is positioned. This direction L is parallel to the rear wall (5) if present. The direction X, perpendicular to the direction L, is the direction of extension of the setback intermediate structures (10).

As shown in Fig. 3 and also in Fig. 4a, the intermediate structures (10) extend in the direction X from a rear area of the generator system (1), where no surfable waves W are formed, towards a front area of the generator system (1) or front water zone (2a) where surfable W waves are formed. As shown in figures, the mass of water (2) of the wave lagoon comprises the front water zone (2a) where surfable W waves are formed and the rear water zone (2b) where surfable W waves are not generated.

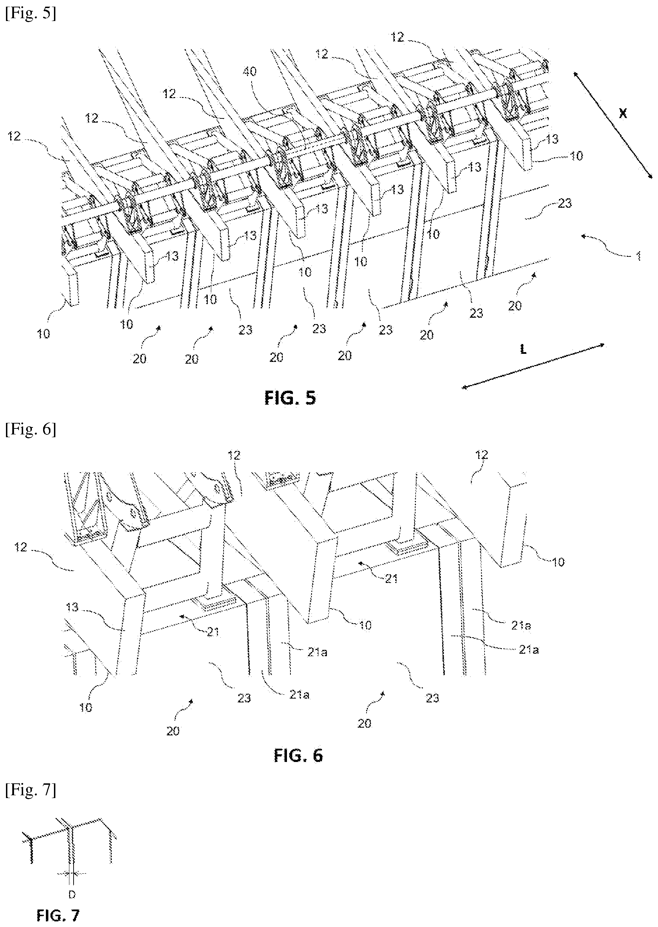

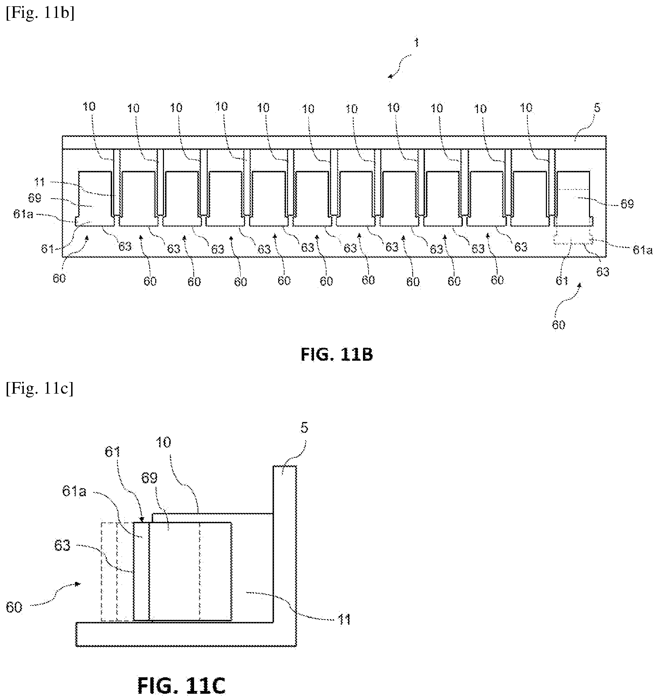

In this first embodiment of the invention, the movable elements of the sequential modules (19) are tilting generators (20) pivoting around a top axis (40), as shown in Figures 4a, 4b, 5 and 9. Each tilting generator (20) is provided with a front widened portion (21) (see Fig. 6). As can be seen in Fig. 4a and 4b, the intermediate structure (10) comprises a lower part (11) and an upper part (12). The widened portion (21) of the tilting generators (20) is located ahead of the lower part (11) of the intermediate structures (10) during the complete wave generation sequence. The configuration of characterising setback intermediate structures (10) the invention can also be clearly seen in the plan views of Fig. 11b, 12b and 13b (corresponding to other embodiments described below).

Preferably, the lower part (11) is a part of the intermediate structures (10) arranged under a maximum height reached by the water in contact with a pushing front face of the movable element when waves W are being generated. In the embodiment of figures, the widened portion (21) extends vertically upwards from the lower end of the tilting generator (20), along the lower part (11) of the intermediate structures (10), to that maximum height at which the water makes contact with a pushing front face (23) (although the outgoing W wave may exceed that referred maximum contact height).

Figure 3 also shows the configuration of the movable wall (3) formed by the set of sequential modules (19) comprising the tilting generators (20). This movable wall (3) is formed by the plurality or set of sequential modules (19), i.e. by the succession of tilting generators (20) arranged along the longitudinal direction L. The movable wall (3) has a front face formed by all the front faces (23) of the tilting generators (20) facing the mass of water (2). The thus formed front face of the movable wall (3) pushes water of the mass of water (2) for the formation of waves W in the front water zone (2a), by means of a serpentine movement as the front faces (23) move with a certain offset between them. As can be seen in Fig. 3, this front face of the movable wall (3) is located ahead of the lower part (11) of the intermediate structures (10), with the advantages already mentioned in relation to conventional protruding divisional walls that extend beyond the pistons.

In the case of the embodiments shown in the figures, with a rectilinear arrangement of modules, the widened portions (21) are located ahead of the lower part (11) of all the intermediate structures (10). In other embodiments, each widened portion (21) is located ahead of the lower part (11) of the adjacent intermediate structures (10).

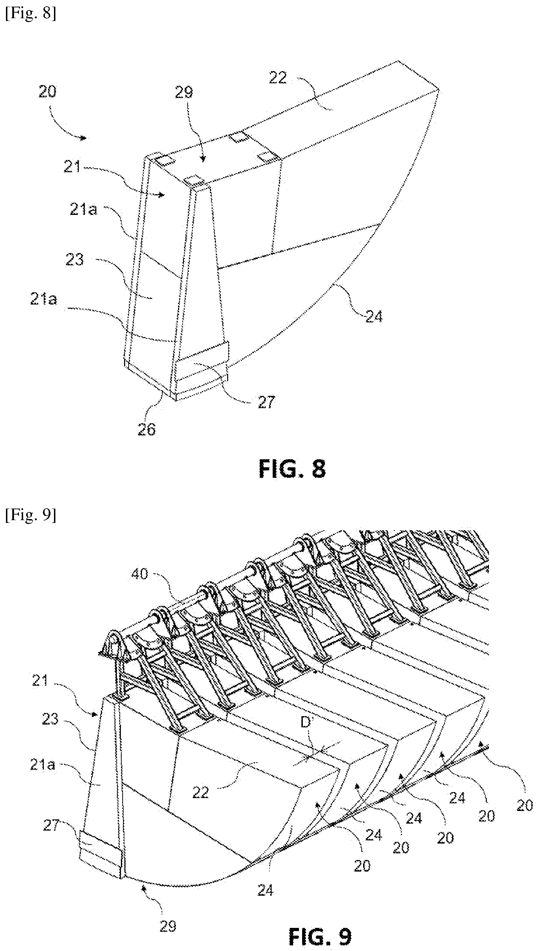

With reference to Figures 6 and 7, the widened portion (21) of the tilting generators (20) is intended to reduce the gap between two adjacent tilting generators (20), ahead of the lower part (11) of the intermediate structures (10), so that there is a minimum gap (D) in the direction L between the widened portion (21) and the adjacent tilting generators (20) that may be located on one side or on both sides. This reduced gap (D) minimises the flow of water towards the rear of the tilting generator (20). Preventing unwanted water flow towards the rear of the tilting generator in the direction X of arrangement of the intermediate structures (10) reduces energy consumption. The rear portion (29) of the tilting generator (20), arranged behind the widened portion (21), has a narrower width compared to the widened portion (21), with a not so critical separation (D') broader than the front gap (D) between movable elements, as can be seen in the perspective rear view of Fig. 9.

Preferably, the gap (D) between the widened portion (21) of a tilting generator (20) and another adjacent tilting generator (20) is smaller than 20 mm. Preferably the gap (D) is smaller than 5 mm. In this way, the amount of water penetrating between the tilting generators (20) is very small compared to the volume of the wave. Thus, the movable wall (3) formed by the sequential modules (19) works efficiently and energy losses are minimised.

As can also be seen in the figures, a portion of the sequential modules (19) (the part that does not protrude with respect to the intermediate structures (10)) is located between two intermediate structures (10), with the usual advantages provided by this type of configuration. Thus, the intermediate structures (10) serve as support for the machinery of the drive system and for the movable element pushing the water, making it possible to avoid the use of other types of submerged or cantilevered support structures. Furthermore, the intermediate structures (10) help to orient the water displacement in a confined direction, minimising lateral forces. Additionally, they also allow the operation of each sequential module (19) to be individualised with respect to other adjacent sequential modules (19), allowing the quality of the waves generated to be maintained, for example in the event of the failure of one of the modules.

Fig. 8 shows a perspective view of an embodiment of the tilting generator (20). As can be seen in Fig. 9, each tilting generator (20) pivots around an axis (40) arranged above a flat pushing front face (23) of the tilting generator (20). The tilting generator (20) comprises a front widened portion (21), intended to be positioned ahead of a lower part (11) of the adjacent intermediate structures (10) when the tilting generator (20) is installed forming part of the generator system (1). The tilting generator (20) also comprises a cylindrical back or face (24) extending from the lower part of the flat front face (23) to the rear of a top face (22) of the tilting generator (20). When the tilting generator (20) is installed as part of the generator system (1), the widened portion (21) extends vertically upwards from the lower end of the tilting generator (20) towards its top face (22), along the lower part (11) of the intermediate structures (10), to a maximum height at which the water makes contact with the water pushing front face (23) when waves W are generated.

Optionally, the widened portion (21) comprises two side projections (21a). In other embodiments of the tilting generator (20) different from that in Fig. 8, the widened portion (21) may have a single side projection (21a). The width of the side projection (21a), in other embodiments, may be greater than the width of the side projections (21a) of the tilting generator (20) of Fig. 8.

Optionally, the side projections (21a) forming the widened portion (21) comprise at least a sliding element (27) allowing to control and reduce the friction between two adjacent tilting generators (20), i.e. between the widened portion (21) of a tilting generator (20) and the widened portion (21) of another adjacent tilting generator (20) arranged in an adjacent location of the generator system (1) or between the widened portion (21) of a tilting generator (20) and the side face (25) of another adjacent tilting generator (20).

The side projections (21a) of the widened portion (21) have sufficient depth to ensure an overlap between widened portions (21) or between a widened portion (21) and the adjacent tilting generator (20), suitable for most types of surfable waves W.

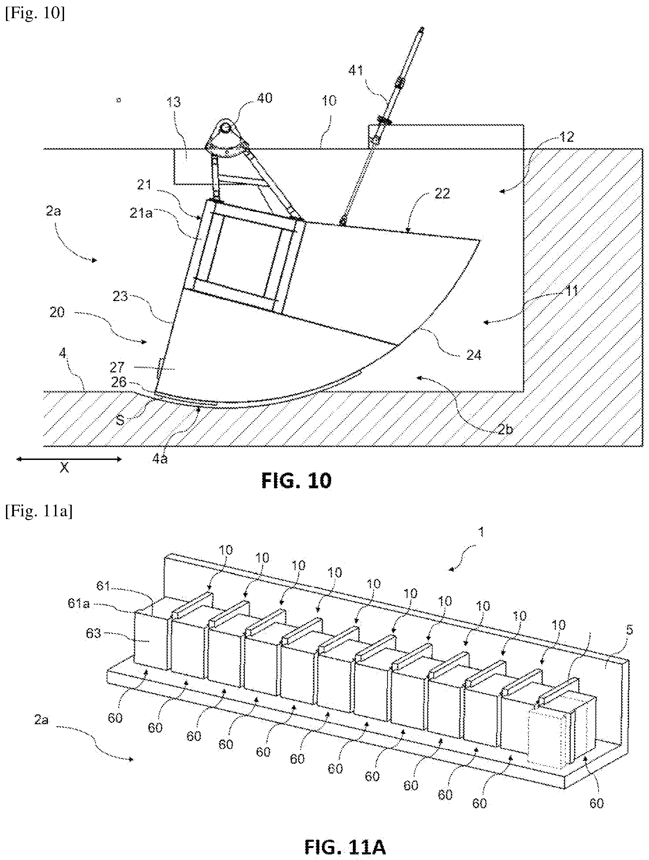

Fig. 10 shows a side view of the system of Fig. 3, showing additional aspects. In the illustrated embodiment, the intermediate structures (10) comprise a lower part (11) and an upper part (12) provided with a cantilevered front part (13). The drive system of the tilting generators (20) is supported by the upper part (12) of the intermediate structures (10). The cantilevered front part (13) also serves as a support for the installation of a cover (not shown) to conceal the sequential modules (19) of the generator system (1). In this Fig. 10 it can be clearly seen how the widened portion (21) of the tilting generator (20) is arranged ahead of the lower part (11) of the intermediate structure (10). This is not incompatible with the fact that there may be an upper part (12) of the intermediate structure (10) which may have a more advanced location in the X direction with respect to the tilting generators (20).

In the embodiment of Fig. 10, the intermediate structures (10) are concrete walls. In other embodiments different form those of Fig. 10, the intermediate structures (10) can be metallic with a front part that may comprise a reinforcement element of the structure, for example, a reinforcement tube, hanging in front of the widened portion (21). In any case, there will always be a lower part (11) of the metallic structure, in a more backward location than the reinforcement tube, located behind the adjacent widened portion (21), thus configuring the setback. Figures 14a, 14b, 15a and 15b illustrate an alternative embodiment of the generator system wherein the intermediate structures are metallic structures. This particular embodiment using structures will be described below.

Again with reference to the side view of Fig. 10, each tilting generator (20) extends almost to the floor (4) of the mass of water (2). It is desirable that the tilting generator (20) is arranged substantially adjacent to the floor (4), so as to substantially prevent water from passing below the modules of the generator system (1). "Substantially preventing the passing of water" means that there should be a slight tolerance or gap with the floor of a few millimeters. In practice, the installation is usually designed with a gap between the tilting generator (20) and the floor of about 50 mm for a wave generator up to 2 meters high. This gap allows for compensation for possible errors and inaccuracies in the manufacturing and/or assembly processes, or to prevent unwanted failures that could be caused by a stone or other element that could obstruct this gap. However, although a gap of about 50 mm prevents the above problems, it may encourage excessive water flow in the X direction which could lead to a loss of wave height. As shown in Fig. 10, optionally, the floor (4) has a recess (4a) in the area of the floor (4) under the tilting generator (20). This recess (4a) is adapted in shape to the cylindrical face (24) of the tilting generators (20) over the entire angular travel of the tilting generators (20). Additionally, an additional element, e.g. a lip or a plate (26) (see Fig. 8), can be provided in order to reduce the gap (S) between the tilting generator (20) and the floor (4).

Preferably, the supplementary element is comprised in the tilting generator (20), for example, it may be a solidary plate (26) extending from the contour of the cylindrical face (24) towards the floor (4). Optionally, the gap (S) between a lower end of the supplementary element and the floor (4) in the recess (4a) is set to a value smaller 20 mm, preferably smaller than 5 mm. This preferable implementation of the supplementary element facilitates the adjustment of the gap (S) in a precise manner and simplifies access for maintenance. In other embodiments, the supplementary element may be solidary to the floor (4).

The recess (4a) in the floor (4) not only reduces the gap (S) between the tilting generator (20) and the floor (4) but also improves hydrodynamics and energy efficiency compared to lagoons with flat floors, minimising turbulence at the lower part of the front face (23) of the tilting generator (20) close to the floor (4). The recess (4a) is necessary in embodiments where the supplementary element is attached to the tilting generator (20).

The top axis (40) tilting generator (20) is also advantageous due to its simplicity of design. It requires a simple drive system, easy to align and with reduced maintenance compared to other alternatives.

Optionally, the drive system of each tilting generator (20) or movable element may be electric, hydraulic or other.

The drive system of the tilting generators (20) is at least partially supported on the upper part (12) of the intermediate structures (10), as shown in Fig.10, with the advantage of being located out of the water. In the embodiment of figures, the drive system (not shown in its entirety) of the tilting generators (20) comprises a hydraulic cylinder (41) connected to the top face (22) of the tilting generator (20), so that the compression and extension of the hydraulic cylinder (41) causes the rotation of the tilting generator (20) around the axis (40) of rotation.

The generator system of the invention is compatible with other technologies suitable for the generation of surfable waves W, i.e. the sequential modules of the generator system may comprise movable elements other than the top axis (40) tilting generators (20) corresponding to the first embodiment described above.

Figures 11a, 11b and 11c show, respectively, a perspective, a plan view and a side view of a second embodiment of the generator system (1) according to the invention, wherein the movable elements of the sequential modules are horizontal pistons (60). Each horizontal piston (60) also comprises a widened portion (61) arranged ahead of a lower part (11) of the adjacent intermediate structures (10) during the entire operating sequence of the generator system (1) (see movement of a horizontal piston (60) illustrated schematically by dashed lines in the figures). In the embodiment of figures, the widened portion (61) comprises two side projections (61a). Each horizontal piston (60) also comprises a front side (63) and a rear portion (69) located behind the widened portion (61). This rear portion (69) is narrower than the widened portion (61).

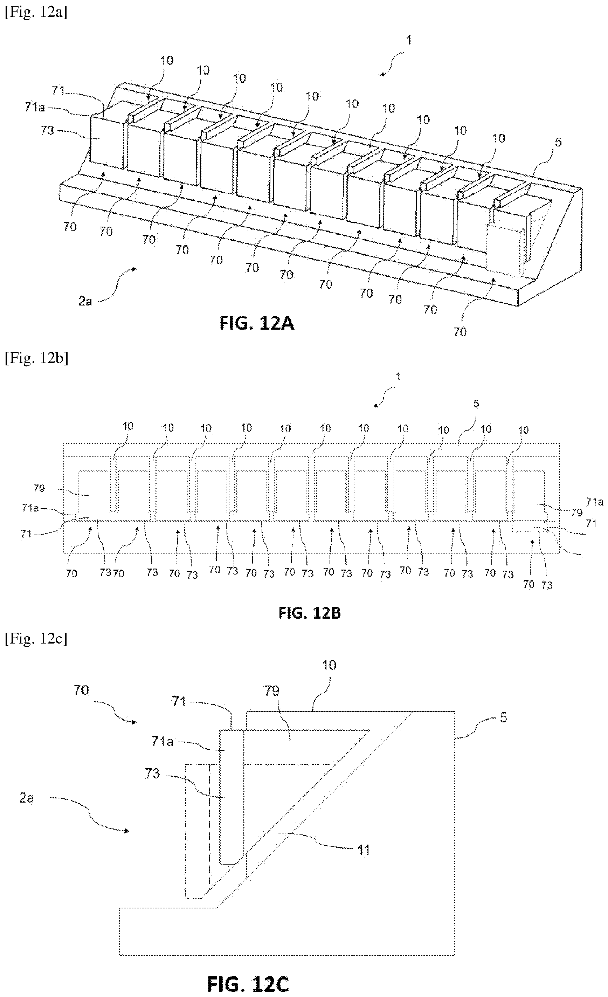

Figures 12a, 12b and 12c show, respectively, a perspective, plan view and side view of a third embodiment of the generator system (1) according to the invention, wherein the movable elements of the sequential modules are sloped pistons (70). Each sloped piston (70) also comprises a widened portion (71) which is arranged in front of a lower part (11) of the adjacent intermediate structures (10), during the entire operating sequence of the generator system (1) (movement of one of the sloped pistons (70) illustrated schematically by means of dashed lines in the figures). In the embodiment of figures, the widened portion (71) comprises two side projections (71a). Each sloped piston (70) also comprises a front side (73) and a rear portion (79) located behind the widened portion (71). This rear portion (79) is narrower than the widened portion (71).

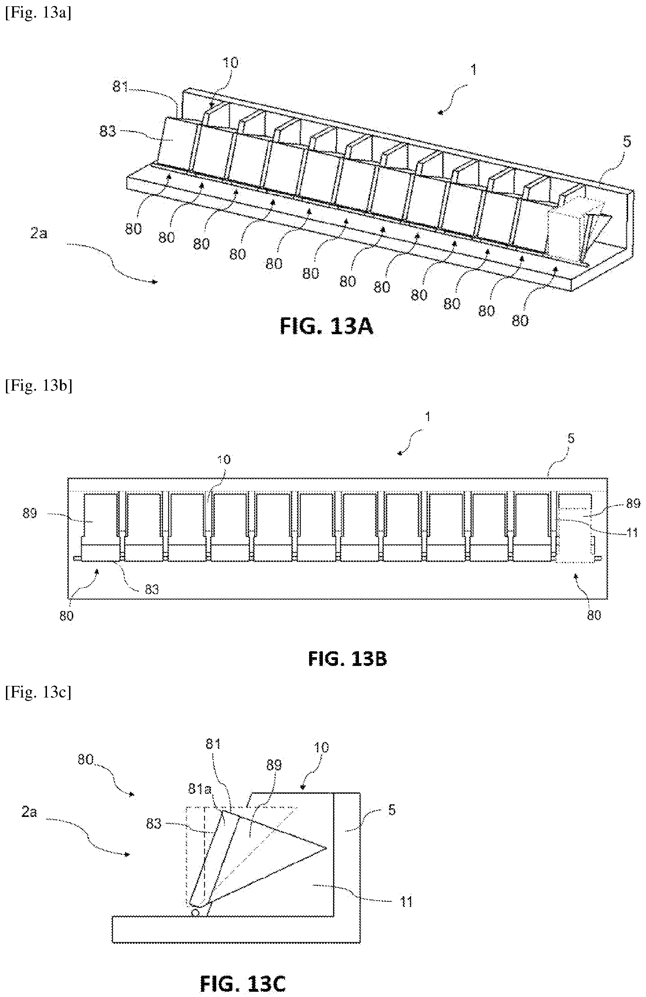

Figures 13a, 13b and 13c show, respectively, a perspective, a plan view and a side view of a fourth embodiment of the generator system (1) according to the invention, where the movable elements of the sequential modules are lower axis tilting pistons (80). Also in this case, each tilting piston (80) also comprises a widened portion (81) which is arranged ahead of a lower part (11) of the adjacent intermediate structures (10) during the entire operating sequence of the generator system (1) (movement of one of the lower axis tilting pistons (80) illustrated schematically by dashed lines in the figures). In the embodiment of figures, the widened portion (81) comprises two side projections (81a). Each tilting piston (80) also comprises a front side (83) and a rear portion (89) located behind the widened portion (81). This rear portion (89) is narrower than the widened portion (81).

Figures 14a, 14b, 15a and 15b illustrate an alternative embodiment of the wave generator system of the invention. In this particular embodiment of the generator system (1), the sequential modules (19) are also arranged according to a direction L in adjacent or contiguous locations. Between two adjacent locations there is an intermediate structure (10), in this case a metallic structure between two contiguous movable elements. As in the embodiment of Fig. 3, each metallic intermediate structure (10) extends along a direction X perpendicular to the direction L, from a rear zone behind the generator system (1) towards a front water zone (2a) of the mass of water (2) in which the surfable waves W are formed. Optionally, the movable elements are tilting generators (20) pivoting around a top axis (40).

As can be seen in figures, optionally, each metallic structure defining an intermediate structure (10) comprises a rear vertical portion configured in the form of a grid (10a), a horizontal beam (10c) and a reinforcement tube (10b) or front inclined portion. In other embodiments, the metallic structure may have another configuration. In any case, a lower part (11) and an upper part (12) can be defined in the metallic structure defining the intermediate structure (10), so that the widened portion (21) of the tilting generators (20) is located ahead of the lower part (11) of the intermediate structures (10) during the complete wave generation sequence. In the embodiment of Figs. 14a, 14b, 15a, 15b, the lower part (11) is, in particular, a lower portion of the intermediate grid (10a) between two tilting generators (20). In other words, at least a lower portion of the intermediate grid (10a) is arranged behind the widened portion (21) of the tilting generators (20).

The upper part (12) of the metal structure is connected to a front part (13) of the metal structure. Figures 15a and 15b clearly show how the widened portion (21) of the tilting generator (20) is arranged ahead of the lower part (11) of the intermediate structure (10) (ahead of the lower portion of the grid (10a)) in both limit positions of the angular travel of the tilting generator (20). This is not incompatible with the fact that there may be an upper part (12) of the intermediate structure (10) (e.g. the horizontal beam (10c) which may extend further forward in the X direction with respect to the tilting generators (20). In this embodiment of the metallic intermediate structures (10), the front part (13) of the intermediate structures (10) also comprises a reinforcement tube (10b) which hangs in front of the widened portion (21). However, there is a lower part (11) of the metallic structure (the aforementioned lower portion of the grid (10a)) arranged in a location further back than the reinforcement tube (10b) and behind the adjacent widened portion (21), thus configuring the setback.

The implementation of the intermediate structures (10) by means of metallic structures is also compatible with other types of movable elements, such as horizontal pistons, ramp pistons or tilting pistons around a bottom axis.

The particular configuration of other elements of the lagoon, such as side edges or shores may vary, the invention being compatible with other alternatives that these elements may present.

The configuration of the intermediate structures (10) can be straight, as in the embodiment of the figures, although they could also present a slight curvature, provided that it does not interfere with the characterising functionality of the invention.

The modules of the generator system of the invention may be arranged in an aligned manner forming a single row as in the embodiment shown in the figures. Alternatively, the generator system of the invention may comprise several lines or rows of sequential modules forming a certain angle between those lines of modules.

## Claims

1. Wave W generator system (1) in a front water zone (2a) of a mass of water (2),
the generator system (1) comprising at least a set of sequential modules (19) arranged in adjacent locations, each sequential module (19) comprising a movable element, wherein the movable elements form a moving wall configured to cause disturbances in the mass of water (2) to generate waves,
wherein each pair of consecutive adjacent locations is at least partially delimited by an intermediate structure (10) extending between two contiguous movable elements towards the front water zone (2a),
wherein
- the movable element comprises a widened portion (21;61;71;81), which is located ahead of a lower part (11) of at least an adjacent delimiting intermediate structure (10), and comprises a rear portion (29;69;79;89) located behind the widened portion (21;61;71;81) and narrower than the widened portion (21;61;71;81).

2. Generator system (1), according to claim 1, wherein each movable element is a tilting generator (20) around an axis (40) arranged above a front face (23) of the tilting generator (20).

3. Generator system (1), according to claim 2, wherein the mass of water (2) is arranged on a floor (4) comprising a recess (4a) adapted in shape to a cylindrical face (24) of the tilting generators (20).

4. Generator system (1), according to claim 3, wherein the tilting generator (20) comprises a supplementary element solidary to the tilting generator (20), the supplementary element extending from the contour of the cylindrical face (24) towards the floor (4).

5. Generator system (1), according to claim 4, wherein the gap (S) between a lower end of the supplementary element and the floor (4) is smaller than 20 mm, preferably smaller than 5 mm.

6. Generator system (1), according to claim 1, wherein the drive system of the movable element is at least partially supported by the intermediate structures (10), the drive system being electric, hydraulic or otherwise.

7. Generator system (1), according to claim 1, wherein each movable element is a horizontal piston (60).

8. Generator system (1), according to claim 1, wherein each movable element is a sloped piston (70).

9. Generator system (1), according to claim 1, wherein each movable element is a bottom axis tilting piston (80).

10. Generator system (1), according to claim 1, wherein the gap (D) between the widened portion (21;61;71;81) of a movable element with respect to at least another adjacent movable element is smaller than 20 mm, preferably smaller than 5 mm.

11. Generator system (1), according to any of the preceding claims, wherein the lower part (11) of the intermediate structures (10) is arranged under a maximum height reached by the water in contact with a water pushing front face (23;63;73;83) of the movable element when waves W are being generated.

12. Generator system (1), according to claim 11, wherein the widened portion (21;61;71;81) extends vertically upwards from a lower end of the movable element along the lower part (11) of the intermediate structures (10).

13. Generator system (1), according to any of the claims 2 to 5, wherein the tilting generator (20) comprises a cylindrical face (24) extending from a lower part of the front face (23) to a rear of a top face (22) of the tilting generator (20) .

14. Generator system (1), according to any of the preceding claims, wherein the widened portion (21;61;71;81) comprises at least a side projection (21a;61a;71a;81a).

15. Generator system (1), according to any of the claims 1 to 14, wherein each intermediate structure (10) is a concrete wall.

16. Generator system (1), according to any of the claims 1 to 14, wherein each intermediate structure (10) is a metallic structure.

17. A surfable wave W lagoon comprising a wave W generator system (1) according to any of claims 1 to 16.

## Patentansprüche

1. Wellen-W-Generatorsystem (1) in einer vorderen Wasserzone (2a) einer Wassermasse (2), wobei das Generatorsystem (1) mindestens einen Satz von aufeinanderfolgenden Modulen (19) umfasst, die an benachbarten Stellen angeordnet sind, wobei jedes aufeinanderfolgende Modul (19) ein bewegliches Element umfasst, wobei die beweglichen Elemente eine sich bewegende Wand bilden, die so konfiguriert ist, dass sie Störungen in der Wassermasse (2) verursacht, um Wellen zu erzeugen, wobei jedes Paar aufeinanderfolgender benachbarter Stellen zumindest teilweise durch eine Zwischenstruktur (10) begrenzt ist, die sich zwischen zwei aneinandergrenzenden beweglichen Elementen in Richtung der vorderen Wasserzone (2a) erstreckt,
wobei
- das bewegliche Element einen verbreiterten Abschnitt (21; 61; 71; 81) umfasst, der vor einem unteren Teil (11) mindestens einer benachbarten begrenzenden Zwischenstruktur (10) angeordnet ist, und einen hinter dem verbreiterten Abschnitt (21; 61; 71; 81) angeordneten hinteren Abschnitt (29; 69; 79; 89) umfasst, der schmaler als der verbreiterte Abschnitt (21; 61; 71; 81) ist.

2. Generatorsystem (1) nach Anspruch 1, wobei jedes bewegliche Element ein Kippgenerator (20) um eine Achse (40) ist, die oberhalb einer vorderen Fläche (23) des Kippgenerators (20) angeordnet ist.

3. Generatorsystem (1) nach Anspruch 2, wobei die Wassermasse (2) auf einem Boden (4) angeordnet ist, der eine Aussparung (4a) umfasst, die in ihrer Form an eine zylindrische Fläche (24) der Kippgeneratoren (20) angepasst ist.

4. Generatorsystem (1) nach Anspruch 3, wobei der Kippgenerator (20) ein zusätzliches Element umfasst, das fest mit dem Kippgenerator (20) verbunden ist, wobei sich das zusätzliche Element von der Kontur der zylindrischen Fläche (24) zum Boden (4) erstreckt.

5. Generatorsystem (1) nach Anspruch 4, wobei der Spalt (S) zwischen einem unteren Ende des zusätzlichen Elements und dem Boden (4) kleiner als 20 mm, vorzugsweise kleiner als 5 mm ist.

6. Generatorsystem (1) nach Anspruch 1, wobei das Antriebssystem des beweglichen Elements zumindest teilweise von den Zwischenstrukturen (10) getragen wird, wobei das Antriebssystem elektrisch, hydraulisch oder anderweitig ist.

7. Generatorsystem (1) nach Anspruch 1, wobei jedes bewegliche Element ein horizontaler Kolben (60) ist.

8. Generatorsystem (1) nach Anspruch 1, wobei jedes bewegliche Element ein Schrägkolben (70) ist.

9. Generatorsystem (1) nach Anspruch 1, wobei jedes bewegliche Element ein Kippkolben (80) mit unterer Achse ist.

10. Generatorsystem (1) nach Anspruch 1, wobei der Spalt (D) zwischen dem verbreiterten Abschnitt (21 ;61 ;71 ;81) eines beweglichen Elements in Bezug auf mindestens ein anderes benachbartes bewegliches Element kleiner als 20 mm, vorzugsweise kleiner als 5 mm ist.

11. Generatorsystem (1) nach einem der vorangehenden Ansprüche, wobei der untere Teil (11) der Zwischenstrukturen (10) unter einer maximalen Höhe angeordnet ist, die das Wasser in Kontakt mit einer wasserdrückenden vorderen Fläche (23; 63; 73; 83) des beweglichen Elements erreicht, wenn Wellen W erzeugt werden.

12. Generatorsystem (1) nach Anspruch 11, wobei sich der verbreiterte Abschnitt (21; 61; 71; 81) vertikal nach oben von einem unteren Ende des beweglichen Elements entlang des unteren Teils (11) der Zwischenstrukturen (10) erstreckt.

13. Generatorsystem (1) nach einem der Ansprüche 2 bis 5, wobei der Kippgenerator (20) eine zylindrische Fläche (24) umfasst, die sich von einem unteren Teil der vorderen Fläche (23) zu einer Rückseite einer oberen Fläche (22) des Kippgenerators (20) erstreckt.

14. Generatorsystem (1) nach einem der vorhergehenden Ansprüche, wobei der verbreiterte Abschnitt (21; 61; 71; 81) mindestens einen seitlichen Vorsprung (21a; 61a; 71a; 81a) umfasst.

15. Generatorsystem (1) nach einem der Ansprüche 1 bis 14, wobei jede Zwischenstruktur (10) eine Betonwand ist.

16. Generatorsystem (1) nach einem der Ansprüche 1 bis 14, wobei jede Zwischenstruktur (10) eine Metallstruktur ist.

17. Surfbare Wellen-W-Lagune mit einem Wellen-W-Generator-System (1) nach einem der Ansprüche 1 bis 16.

## Revendications

1. Système générateur de vagues W (1) dans une zone d'eau frontale (2a) d'une masse d'eau (2), le système générateur (1) comprenant au moins un ensemble de modules séquentiels (19) disposés dans des emplacements adjacents, chaque module séquentiel (19) comprenant un élément mobile, dans lequel les éléments mobiles forment une paroi mobile configurée pour provoquer des perturbations dans la masse d'eau (2) afin de générer des vagues, dans lequel chaque paire d'emplacements adjacents consécutifs est au moins partiellement délimitée par une structure intermédiaire (10) s'étendant entre deux éléments mobiles contigus vers la zone d'eau frontale (2a).
où
- l'élément mobile comprend une partie élargie (21;61;71;81), qui est situé devant une partie inférieure (11) d'au moins une structure intermédiaire de délimitation adjacente (10), et comprend une partie arrière (29;69;79;89) située derrière la partie élargie (21;61;71;81) et est plus étroite que la partie élargie (21;61;71;81).

2. Système générateur (1) conformément à la revendication 1, où chaque élément mobile est un générateur basculant (20) autour d'un axe (40) disposé au-dessus d'une face avant (23) du générateur basculant (20).

3. Système générateur (1) conformément à la revendication 2, où la masse d'eau (2) est disposée sur un sol (4), comprenant une encoche (4a) à la forme adaptée à une face cylindrique (24) des générateurs basculants (20).

4. Système générateur (1) conformément à la revendication 3, où le générateur basculant (20) comprend un élément supplémentaire solidaire au générateur basculant (20), l'élément supplémentaire s'étendant depuis le contour de la face cylindrique (24) vers le sol (4).

5. Système générateur (1) conformément à la revendication 4, où l'intervalle (S) entre une extrémité inférieure de l'élément supplémentaire et le sol (4) est inférieure à 20 mm, de préférence inférieure à 5 mm.

6. Système générateur (1) conformément à la revendication 1, où le système d'entraînement de l'élément mobile est au moins partiellement supporté par les structures intermédiaires (10), le système d'entraînement étant électrique, hydraulique ou autre.

7. Système générateur (1) conformément à la revendication 1, où chaque élément mobile est un piston horizontal (60).

8. Système générateur (1) conformément à la revendication 1, où chaque élément mobile est un piston incliné (70).

9. Système générateur (1) conformément à la revendication 1, où chaque élément mobile est un piston basculant de l'axe inférieur (80).

10. Système générateur (1) conformément à la revendication 1, où l'espace (D) entre la partie élargie (21;61;71;81) d'un élément mobile par rapport à au moins un autre élément mobile adjacent est inférieur à 20 mm, de préférence inférieur à 5 mm.

11. Système générateur (1) conformément l'une quelconque des revendications précédentes, où la partie inférieure (11) des structures intermédiaires (10) est disposée sous une hauteur maximale atteinte par l'eau en contact avec une face avant de poussée d'eau (23;63;73;83) de l'élément mobile lorsque les vagues W sont en cours de génération.

12. Système générateur (1), conformément à la revendication 11, où la partie élargie (21;61;71;81) s'étend verticalement vers le haut à partir d'une extrémité inférieure de l'élément mobile le long de la partie inférieure (11) des structures intermédiaires (10).

13. Système générateur (1) conformément l'une quelconque des revendications 2 à 5, où le générateur basculant (20) comprend une face cylindrique (24) s'étendant depuis une partie inférieure de la face avant (23) à l'arrière d'une face supérieure (22) du générateur basculant (20).

14. Système générateur (1) conformément l'une quelconque des revendications précédentes, où la partie élargie (21;61;71;81) comprend au moins une projection latérale (21a;61a;71a;81a).

15. Système générateur (1) conformément l'une quelconque des revendications 1 à 14, où chaque structure intermédiaire (10) est une paroi en béton.

16. Système générateur (1) conformément à l'une des revendications 1 à 14, où chaque structure intermédiaire (10) est une structure métallique.

17. Une lagune à vagues W surfables comprenant un système générateur de vagues W (1) selon l'une quelconque des revendications 1 à 16.
